Europäisches Patentamt

European Patent Office

Office européen des brevets

(11) Veröffentlichungsnummer: **0 304 669 B1**

(12) **EUROPÄISCHE PATENTSCHRIFT**

(45) Veröffentlichungstag der Patentschrift: **29.01.92**

(51) Int. Cl.⁵: **B65G 15/14**

(21) Anmeldenummer: **88112402.8**

(22) Anmeldetag: **30.07.88**

(54) **Abdichtung an einem Senkrechtförderer für Massengut.**

(30) Priorität: **27.08.87 DE 3728624**

(43) Veröffentlichungstag der Anmeldung:
**01.03.89 Patentblatt 89/09**

(45) Bekanntmachung des Hinweises auf die
Patenterteilung:
**29.01.92 Patentblatt 92/05**

(84) Benannte Vertragsstaaten:
**FR GB NL SE**

(56) Entgegenhaltungen:
**EP-A- 0 009 764
EP-A- 0 149 206
EP-A- 0 155 774
DE-B- 1 120 978**

(73) Patentinhaber: **Fried. Krupp Gesellschaft mit
beschränkter Haftung
Altendorfer Strasse 103
W-4300 Essen 1(DE)**

(72) Erfinder: **Héjj, Erwin, Dipl.-Ing.
Juistweg 13
W-4300 Essen 1(DE)**
Erfinder: **Manthey, Harald, Dipl.-Ing.
Ulmenallee 106
W-4330 Mülheim/Ruhr(DE)**
Erfinder: **Kostrewa, Ludwig, Ing. grad.
Ludwig Richter Ring 24
W-4130 Moers 1(DE)**
Erfinder: **Zimek, Dieter, Dipl.-Ing.
Heimstättenweg 8
W-4300 Essen 1(DE)**

**Beschreibung**

Die Erfindung bezieht sich auf eine Abdichtung an einem Senkrechtförderer für Massengut mit einem Förderraum, der im Querschnitt von zwei an Stützwalzen gehaltenen Endlosförderbändern und zwei Seitenbegrenzungen umschlossen ist, wobei die Endlosförderbänder und Seitenbegrenzungen quer zur Förderrichtung hin- und herbewegbar angetrieben sind. Unter Senkrechtförderern im Sinne der Erfindung sind auch Fördereinrichtungen mit Förderräumen zu verstehen, deren Neigung bis zu 10° bis 15° von der Senkrechten abweicht; sie kommen insbesondere im Steinkohlenbergbau, in Gewinnungsbetrieben für Baustoffe wie Sand und Kies sowie als Schiffsentlader zum Einsatz.

Bei einem gattungsgemäßen Senkrechtförderer - bekannt aus der EP-Al-0149 206 - stehen die den Förderraum bildenden Endlosförderbänder und sich an diese seitlich anschließenden Seitenbegrenzungen mit einem Schwingungserreger - beispielsweise in Form eines Schubkurbelantriebs - in Verbindung, welcher den Förderraum quer zu seiner Längserstrekkung (und damit Förderrichtung) in Schwingungen versetzt.
Die Seitenbegrenzungen bestehen aus Platten oder Zusatzförderbändern, die seitlich an den beiden anderen Endlosförderbändern in Anlage gehalten werden. Eine Abdichtung gegen den Austritt staubförmiger oder feinkörniger Massengut-Bestandteile kann dabei allenfalls mit erheblichem technischem Aufwand verwirklicht werden.

Mit der DE-Patentschrift 1 120 978 ist bereits für einen Steilförderer ohne Schwingungserreger der Vorschlag unterbreitet worden, die beiden zugehörigen Endlosförderbänder mit Profilleisten-Seitenwänden auszustatten, die ineinandergreifen und einen geschlossenen Förderstrang bilden. Der Nachteil dieser bekannten Ausführungsform ist darin zu sehen, daß sie aufwendig aufgebaute Endlosförderbänder benötigt, die im Überlappungsbereich einem erhöhten Verschleiß unterworfen sind.

Der Erfindung liegt die Aufgabe zugrunde, auch für einen schwingungsbeaufschlagten Senkrechtförderer eine Abdichtung anzugeben, die bei vertretbarem technischem Aufwand den Austritt staubförmiger und feinkörniger Bestandteile aus dem Förderraum weitestgehend ausschließt.

Die gestellte Aufgabe wird durch eine Abdichtung mit den Merkmalen des Anspruchs 1 gelöst. Der der Erfindung zugrundeliegende Lösungsgedanke besteht danach darin, den Endlosförderbändern nicht umlaufende Seitenbegrenzungen zuzuordnen, die bezüglich der Stützwalzen für die Endlosförderbänder ortsfest sind - also lediglich deren Schwingungsbewegungen quer zur Förderrichtung ausführen - und die bezüglich der Endlosförderbänder berührungsfrei gehalten sind; die Seitenbegrenzungen können zwar auch in geringem Umfang elastisch verformbar ausgebildet sein, stellen im Grundsatz jedoch starre, platten- oder wandähnliche Bauelemente dar. Um den Austritt staubförmiger oder feinkörniger Bestandteile aus dem Förderraum zu verhindern, weisen die Seitenbegrenzungen entsprechend angeordnete Leckagekammern auf, die über Kanäle mit vergleichsweise geringem Querschnitt unmittelbar oder mittelbar mit dem Förderraum in Verbindung stehen. Zweckmäßigerweise liegen die Anfangsquerschnitte der Kanäle dem benachbarten Endlosförderband außerhalb des Förderraums gegenüber und sind bezüglich des Endlosförderbandes vom Förderraum weggerichtet schräg angeordnet. Massengutbestandteile mit kleinen Abmessungen gelangen unter Einwirkung der Schwingungsbewegungen an den Seitenbegrenzungen vorbei in den Bereich der Kanäle und durch diese hindurch in die Leckagekammern, aus denen sie gezielt abgeführt werden können. Die Leckagekammern verlaufen im Normalfall parallel zum Förderraum; die Kanäle unterbrechen die Dichtflächen der Seitenbegrenzungen, die mit den Endlosförderbändern Dichtspalte bilden. Deren Länge sollte so bemessen sein, daß sie ein Mehrfaches der Dicke des benachbarten Endlosförderbandes ausmacht (Anspruch 2).

Die Dichtwirkung der Seitenbegrenzungen läßt sich ggf. dadurch weiter verbessern, daß jede Leckagekammer mehrere nebeneinander liegende Kanäle aufweist (Anspruch 3), die vorzugsweise bezüglich des benachbarten Endlosförderbandes gleichartig ausgerichtet sind (Anspruch 4).
Im allgemeinen verlaufen die Kanäle bezüglich des benachbarten Endlosförderbandes unter einem Winkel in der Größenordnung von 45°; abhängig von der Art des zu befördernden Massengutes können die Kanäle jedoch auch eine andere Schrägstellung erfahren.

Eine die Dichtwirkung unterstützende Luftströmung in Richtung zum Förderraum läßt sich dadurch erzeugen, daß die Seitenbegrenzungen an ihren den Endlosförderbändern zugewandten Seiten SperrluftLeitrippen aufweisen, die schräg zur Bewegungsrichtung des benachbarten Endlosförderbandes ausgerichtet sind (Anspruch 5). Die Luftströmung kann dabei zwangsweise mittels eines Gebläses (Druckgebläse, Saugzuggebläse) hervorgerufen werden, welches den Leckagekammern zugeordnet ist (Anspruch 6). Das Gebläse verhindert nicht nur das Festbacken von Massengutbestandteilen in den Leckagekammern, sondern verbessert durch Erzeugen einer entsprechend gerichteten Luftströmung auch die Dichtwirkung der Seitenbegrenzungen.

Zum Schutze der Seitenbegrenzungen tragen diese auf ihrer dem Förderraum zugewandten Innenseite auswechselbare Verschleißplatten (Anspruch 7); diese können so ausgebildet sein, daß sie die Wandung der Kanäle mitbilden (Anspruch 8). Bei einer bevorzugten Ausführungsform des Erfindungsgegenstandes ist die dem benachbarten Endlosförderband zugewandte Seitenfläche jeder Verschleiplatte derart geneigt, daß der Abstand zwischen dieser und dem Endlosförderband in Richtung auf den nachfolgenden Kanal abnimmt (Anspruch 9).

Die vom Erfindungsgegenstand ausgehende Dichtwirkung läßt sich unter Umständen verbessern, wenn die Verschleißplatten in der Nähe der Endlosförderbänder mit Verdickungen ausgestattet werden, deren Bestandteil die (zuvor erwähnte) Seitenfläche ist (Anspruch) 10). Die Verdickungen bewirken, daß das zu befördernde Massengut aufgrund der Schwingungsbewegungen in Richtung auf den Mittelbereich des Förderraums abgelenkt und damit die Dichtspalte zwischen den Endlosförderbändern und den Seitenbegrenzungen entlastet werden.

Um Ausweichbewegungen der Endlosförderbänder und damit unerwünschte Änderungen im Bereich der Dichtspalte nach Möglichkeit auszuschließen, stützen sich die Endlosförderbänder - zweckmäßigerweise über ihre gesamte Breite - im Bereich der Seitenbegrenzungen zusätzlich an Führungsblechen ab, die zwischen den in Förderrichtung aufeinanderfolgenden Stützwalzen angeordnet sind (Anspruch 11). An Stelle der Führungsbleche können auch andere Zusatzabstützungen zur Anwendung kommen, sofern diese geeignet sind, unerwünschte Veränderungen der Größe des Dichtspalte im Überlappungsbereich zwischen Endlosförderband und Seitenbegrenzung auszuschließen.

Die im Grundsatz berührungslos arbeitende Abdichtung kann erforderlichenfalls durch einstellbare Dichtlippen ergänzt werden, die im Bereich der Leckagekammern nachgiebig an dem benachbarten Endlosförderband anliegen (Anspruch 12); die Dichtlippen können dabei selbst nachgiebig ausgebildet und/oder (beispielsweise über Federelemente) nachgiebig an den Seitenbegrenzungen befestigt sein. Zweckmäßigerweise sind die Dichtlippen derart ausgebildet und angeordnet, daß sie einen Teil der Wandung der in die Leckagekammern einmündenden Kanäle bilden.

Die Leckagekammern können im Querschnitt an sich beliebig ausgebildet sein. Bei einer besonders zweckmäßigen Ausführungsform des Erfindungsgegenstandes ist jede Leckagekammer - in der Draufsicht gesehen - dreickförmig ausgebildet, wobei die dem Förderraum benachbarte Kanalwandung geradlinig in die dem Förderraum benachbarte Kammerwand über geht (Anspruch 13).

Die Erfindung wird nachfolgend anhand der Zeichnung erläutert, in der stark schematisiert mehrere Ausführungsbeispiele des Erfindungsgegenstandes dargestellt sind.
Es zeigen:

Fig. 1    anhand eines Horizontalteilschnitts den grundsätzlichen Aufbau eines erfindungsgemäß ausgebildeten Senkrechtförderers,

Fig. 2    einen Horizontalteilschnitt durch einen Senkrechtförderer im Bereich einer Seitenbegrenzung, deren dem Förderraum zugewandte Innenseite eine auswechselbare Verschleißplatte trägt,

Fig. 3    einen Horizontalteilschnitt durch einen Senkrechtförderer mit einer Seitenbegrenzung, die an ihrer dem benachbarten Endlosförderband zugewandten Seite Sperrluft-Leitrippen aufweist,

Fig. 3a    eine Teilansicht der in Fig. 3 dargestellten Seitenbegrenzung mit Blick auf die Sperrluft-Leitrippen,

Fig. 4    einen Horizontalteilschnitt durch einen Senkrechtförderer mit einer Seitenbegrenzung und einer Verschleißplatte, die eine bezüglich des benachbarten Endlosförderbandes abgeschrägte Seitenfläche aufweist,

Fig. 5    einen Horizontalteilschnitt durch einen Senkrechtförderer mit einer Seitenbegrenzung und einer Verschleißplatte, deren dem benachbarten Endlosförderband zugewandter Seitenabschnitt eine Verdickung aufweist,

Fig. 6    einen Horizontalteilschnitt durch einen Senkrechtförderer mit einer Seitenbegrenzung und einer innenliegenden Leckagekammer, die über zwei nebeneinanderliegende Kanäle mit dem Förderraum in Verbindung steht, und

Fig. 7    einen Horizontalteilschnitt durch einen Senkrechtförderer mit einer Seitenbegrenzung und einer im Bereich der zugehörigen Leckagekammer angeordneten nachgiebigen Dichtlippe.

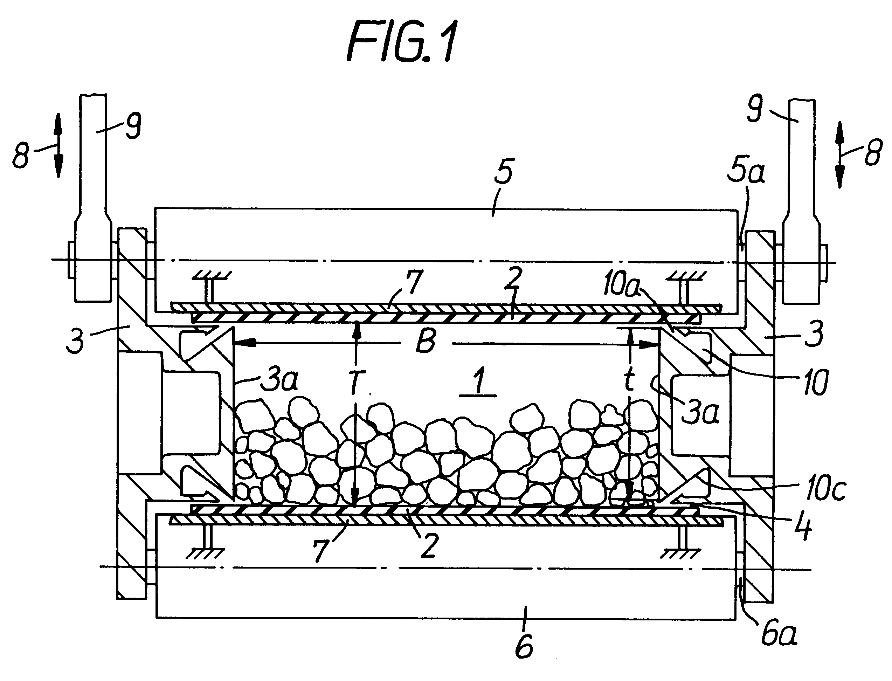

Der in Fig. 1 schematisch dargestellte Senkrechtförderer weist einen in der Draufsicht rechtekkigen Förderraum 1 auf, der im Querschnitt, also quer zur Förderrichtung gesehen, von zwei sich gegenüberliegenden Endlosbändern 2 und zwei plattenähnlichen Seitenbegrenzungen 3 umschlossen wird; deren gegenseitiger Abstand legt die Breite B des Förderraums 1 fest.
Der gegenseitige Abstand der Endlosförderbänder 2, das heißt die Tiefe T des Förderraums, ist größer als die entsprechende Abmessung t der Seitenbegrenzungen 3 im Bereich zwischen den sich gegenüberliegenden Endlosförderbändern 2;

die Seitenbegrenzungen 3 sind also beiderseits durch Dichtspalte 4 von dem jeweils benachbarten Endlosförderband getrennt.

Die Endlosförderbänder 2 stützen sich an in Förderrichtung (d.h. senkrecht zut Zeichenebene) mit Abstand aufeinander folgenden Stützwalzen 5 bzw. 6 ab; um insbesondere auch im Überlappungsbereich zwischen den Teilen 2 und 3 unerwünschte Lageänderungen auszuschließen, sind zusätzlich zwischen den aufeinander folgenden Stützwalzen Führungsbleche 7 angebracht, an denen die Endlosförderbänder über ihre gesamte Breite anliegen.

Während des Fördervorgangs führen die Endlosförderbänder 2 eine Aufwärtsbewegung aus der Zeichenebene heraus auf, wobei die Stützwalzen 5 und 6 im Uhrzeiger- bzw. Gegenuhrzeigersinn umlaufen.

Der Förderraum 1 kann über an den Stützwalzen 5 angreifende, im Sinne der Doppelpfeile 8 hin- und herbewegte Schubstangen 9 in Schwingungsbewegungen quer zur Förderrichtung versetzt werden.

Die von den Schubstangen 9 ausgehenden Bewegungen werden einerseits über die Wellen 5a auf die Stützwalzen 5 und das zugehörige Endlosförderband 2 sowie andererseits über die Seitenbegrenzungen 3, die Wellen 6a und die Stützwalzen 6 auf das an diesen anliegende Endlosförderband übertragen: Die Seitenbegrenzungen 3 stellen also gleichzeitig ein bezüglich der Stützwalzen 5 und 6 ortsfestes Übertragungselement dar, das heißt sie führen lediglich die von den Schubstangen 9 eingeleiteten Schwingungsbewegungen aus.

Außerhalb des Förderraums 1 (d.h. in Fig. 1 rechts von der rechten bzw. links von der linken Innenseite 3a der rechten bzw. linken Seitenbegrenzung 3) sind die Seitenbegrenzungen mit innenliegenden, in der Draufsicht dreieckförmigen Leckagekammern 10 ausgestattet, die sich, parallel zum Förderraum 1, in Längsrichtung der Seitenbegrenzungen erstrecken und zum Zwecke der Belüftung an ein nicht dargestelltes Gebläse angeschlossen sind.

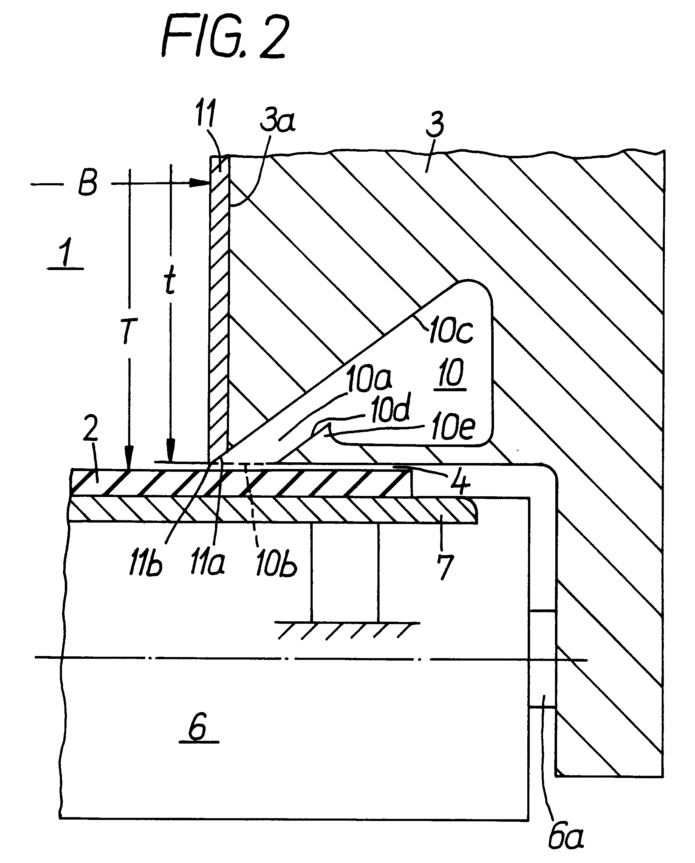

Jede der vier Leckagekammern ist zur Seite hin lediglich über einen Kanal 10a zugänglich, dessen Anfangsquerschnitt 10b dem benachbarten Endlosförderband 2 außerhalb des Förderraums 1 gegenüberliegt (vgl. dazu beispielsweise Fig. 2) und der bezüglich des Endlosbandes vom Förderraum weggerichtet schräg verläuft.

Falls (wie in Fig. 1 bis 5 und 7 dargestellt) die Leckagekammern 10 jeweils nur einen Kanal 10a aufweisen, geht die dem Förderraum benachbarte Kanalwandung geradlinig in die entsprechende Kammerwand 10c über; die andere in Längsrichtung der Seiten begrenzung verlaufende Kanalwandung 10d ist parallel zur Kammerwand 10c angeordnet.

Unter dem Einfluß der während des Fördervorgangs vor sich gehenden Schwingungsbewegungen werden staubförmige und feinkörnige Massengutbestandteile nach Verlassen des Förderraums 1 durch Auf- und Rückprall auf die Flächen 10c und 10d zwangsläufig den Leckagekammern 10 zugeführt; die schräg verlaufenden Kanäle bieten also im Zusammenhang mit den Leckagekammern 10 eine ausreichende Gewähr dafür, daß entsprechend bemessene Massengutbestandteile den Förderraum 1 nur durch die Leckagekammern 10 hindurch verlassen können; deren Wirkung kann erforderlichenfalls dadurch unterstützt werden, daß in den Leckagekammern eine geeignete Luftströmung erzeugt wird.

Bei der in Fig. 2 dargestellten Ausführungsform trägt jede Seitenbegrenzung 3 auf ihrer dem Förderraum 1 zugewandten Innenseite 3a zumindest eine auswechselbare Verschleißplatte 11 aus widerstandsfähigem Material.

Die dem benachbarten Endlosförderband 2 zugewandte Seitenfläche 11a der Verschleißplatte ist derart abgeschrägt, daß sie die dem Fördereraum 1 benachbarte Wandung des Kanals 10a mitbildet. Der Abstand zwischen der vorkragenden Spitze 11b und dem benachbarten Endlosförderband 2 entspricht der Weite des Dichtspalts 4; seine Länge quer zur Längserstreckung der Seitenbegrenzung 3 macht ein Mehrfaches der Dicke des benachbarten Endlosförderbandes 2 aus.

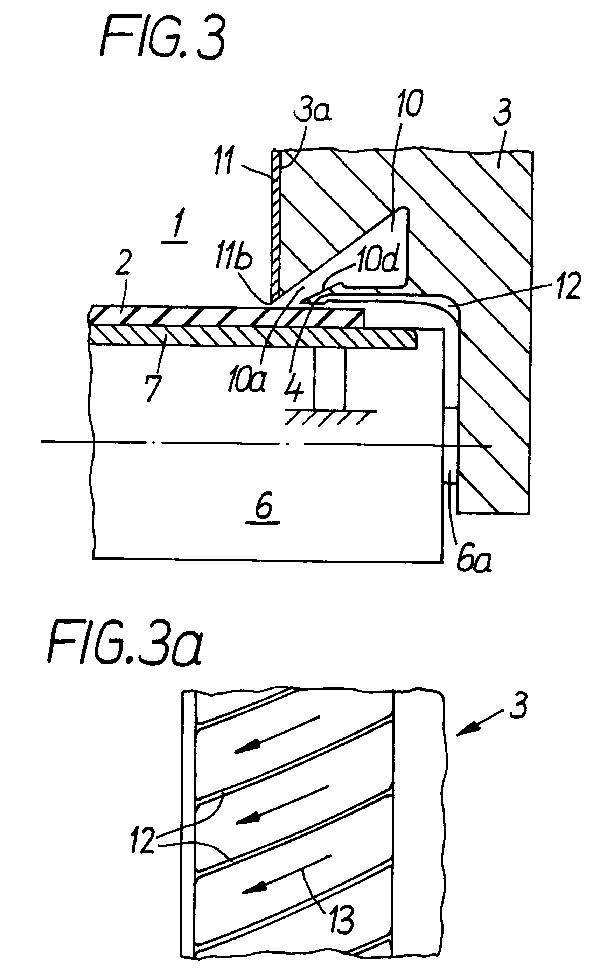

Bei der Ausführungsform nach den Fig. 3 und 3a ist die Seitenbegrenzung 3 auf ihrer dem benachbarten Endlosförderband 2 zugewandten Seite mit Sperrluft-Leitrippen 12 ausgestattet, und zwar in dem Bereich, der sich - vom Förderraum 1 her in Richtung auf die Seitenbegrenzung 3 gesehen - an den Kanal 10a und den Dichtspalt 4 anschließt.

Unter Einwirkung der Sperrluft-Leitrippen, die schräg zur Bewegungsrichtung des benachbarten Endlosförderbandes 2 ausgerichtet sind (vgl. Fig. 3a), entsteht eine von außen nach innen gerichtete Luftströmung (Pfeile 13), welche das Eindringen staubförmiger und feinkörniger Massengutbestandteile in den Dichtspalt 4 hinein und durch diesen hindurch zumindest behindert.

Die Wirkung der Sperrluft-Leitrippen kann erforderlichenfalls dadurch verstärkt werden, daß in der zugehörigen Leckagekammer 10 zwangsweise eine in deren Längerstreckung verlaufende Luftströmung herbeigeführt wird.

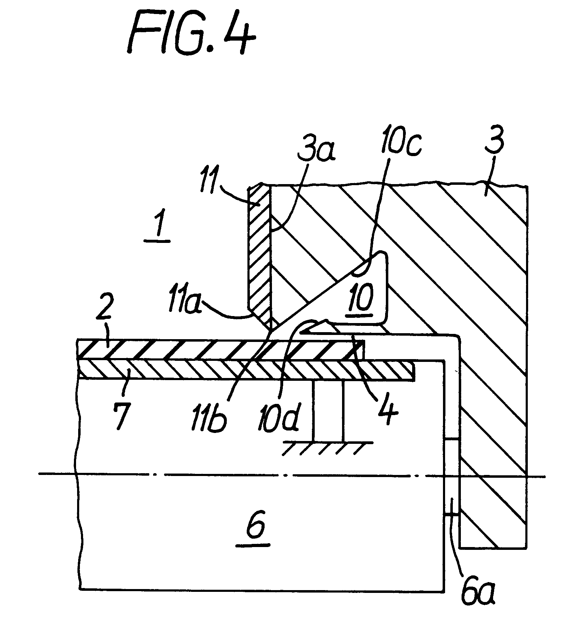

Die Ausführungsform nach Fig. 4 unterscheidet sich in zweierlei Hinsicht von den Ausführungsformen nach Fig. 2 und 3, und zwar hinsichtlich der Ausbildung der Seitenfläche 11a der Verschleißplatte 11 und hinsichtlich des Kanals 10a.

Die Seitenfläche 11a ist bezüglich des benachbarten Endlosförderbandes 2 unter einem Winkel von etwa $45°$ derart geneigt, daß der Spalt zwischen ihr und dem Endlosförderband in Richtung auf den Kanal 10a bis zur Weite des Dichtspalts 4 geradlinig abnimmt. Der Kanal geht dementsprechend von der Innenseite 3a der Seitenbegrenzung 3 aus.

Die dem Förderraum 1 zugewandte Seitenfläche 11a soll dazu beitragen, daß die dort befindlichen Massengutbestandteile aufgrund der Schwingungsbewegungen quer zur Längserstreckung des Förderraums in Richtung auf diesen zurückprallen: Die Seitenflächen - die abweichend von der Darstellung auch gekrümmt ausgebildet sein können - sollen also des Austritt von Massengut aus dem Förderraum 1 zusätzlich behindern.

Sofern die Seitenbegrenzungen 3 mit Verschleißplatten 11 ausgestattet sind, bestimmt deren gegenseitiger Abstand die Breite B des Förderraums.

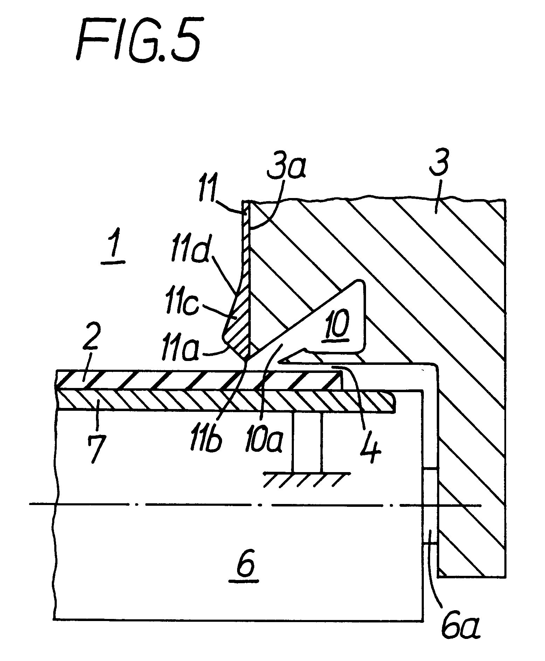

Die den Endlosförderbändern 2 zugewandten Seitenabschnitte der Verschleißplatten 11 können in vor teilhafterweise auch die Form einer Verdickung 11c aufweisen, deren Bestandteil die Seitenfläche 11a ist (Fig. 5). Die andere Begrenzungsfläche 11d der Verdickung ist - bezogen beispielsweise auf die Innenseite 3a der Seitenbegrenzung - vorzugsweise unter einem flachen Winkel in Richtung auf den Förderraum 1 geneigt.

Auch die Begrenzungsfläche 11d soll dazu beitragen, daß das den Schwingungsbewegungen unterworfene Massengut ständig ins Innere des Förderraums zurückgeführt wird.

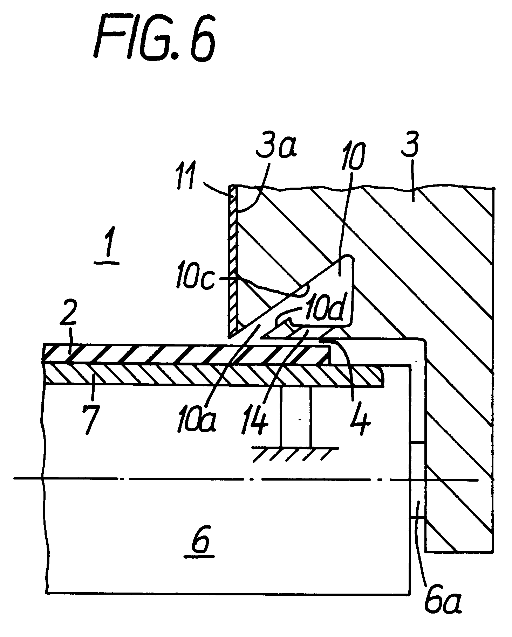

Die in Fig. 6 dargestellte Ausführungsform des Erfindungsgegenstandes unterscheidet sich lediglich dadurch von der Ausführungsform nach Fig. 2, daß jede Leckagekammer 10 zwei nebeneinander liegende Kanäle 10a und 14 aufweist, die bezüglich des benachbarten Endlosförderbandes 2 gleichartig ausgerichtet sind, das heißt in Längsrichtung der Leckagekammer 10 gesehen die gleiche Neigung aufweisen.

Massengutbestandteile, die eventuell in den Dichtspalt 4 hinter der Kanalwand 10d gelangt sind, können durch den Kanal 14 hindurch gegebenenfalls doch noch der Leckagekammer 10 zugeführt und aus dieser gezielt abgeführt werden.

Der Kanal 14 stellt also ein zusätzliches Sperrmittel dar, welches den Austritt staubförmiger und feinkörniger Massengutbestanteile zwischen Endlosband 2 und Seitenbegrenzung 3 nach außen behindert.

Die im Grundsatz berührungsfrei abdichtenden Seitenbegrenzungen 3 können zur Abschirmung des Dichtspalts 4 vorteilhaft auch mit Berührungsdichtungen ausgestattet sein, welche den Zwischenraum zwischen den Teilen 2 und 3 überbrükken.

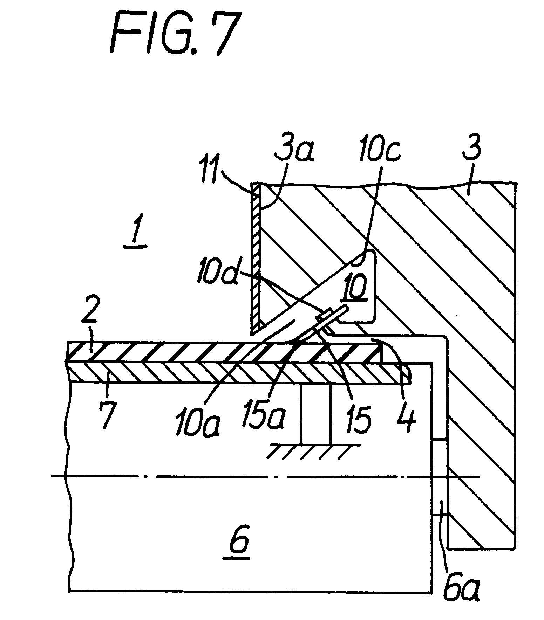

Bei der Ausführungsform nach Fig. 7 ist jede Seitenbegrenzung 3 im Anschluß an den Kanal 10a mit einstellbaren, bürstenartigen Dichtlippen 15 ausgestattet, deren zugespitzter Endabschnitt 15a nachgiebig an dem benachbarten Endlosförderband 2 anliegt.

Die Dichtlippen sind oberhalb des Dichtspalts 4 in Längsrichtung verschiebbar an der Seitenbegrenzung 3 gehalten; ihre Befestigung kann über nicht dargestellte Klemmteile wie beispielsweise Klemmschrauben bewirkt werden.

Die Neigung der Dichtlippen bezüglich des benachbarten Endlosförderbandes 2 ist so gewählt, daß sie in etwa mit der Neigung der Kammerwand 10c und der Neigung der Kanalwandung 10d übereinstimmt.

Im Rahmen der erfindungsgemäßen Lehre kann die Innenseite 3a der Seitenbegrenzung 3 unter Fortfall der Verschleißplatte 11 auch deren Funktion über nehmen, das heißt die Innenseite 3a kann gegebenenfalls auch Seitenflächen entsprechend der in Fig.4 dargestellten Seitenfläche 11a und/oder Verdickungen entsprechend der in Fig. 5 dargestellten Verdickung 11c aufweisen, um den Zutritt von Massengutbestandteilen in den Bereich zwischen den Teilen 2 und 3 zusätzlich zu behindern.

Um den Wiedereintritt von Massengutbestandteilen aus der Leckagekammer 10 in den Kanal 10a zu erschweren, kann die Kanalwandung 10d in Richtung auf die Leckagekammer vorgezogen sein, so daß sich - wie Fig. 2 besonders deutlich erkennen läßt - ein der Leckagekammer 10 zugewandter Vorsprung 10e bildet.

## Patentansprüche

1. Abdichtung an einem Senkrechtförderer für Massengut mit einem Förderraum, der im Querschnitt von zwei an Stützwalzen (5, 6) gehaltenen Endlosförderbändern (2) und zwei Seitenbegrenzungen (3) umschlossen ist, wobei die Endlosförderbänder (2) und Seitenbegrenzungen (3) quer zur Förderrichtung hin- und herbewegbar angetrieben sind, **dadurch gekennzeichnet,** daß die bezüglich der Stützwalzen (5, 6) ortsfesten Seitenbegrenzungen (3), welche durch einen Dichtspalt (4) von den Endlosförderbändern (2) getrennt sind, in Richtung ihrer Längserstreckung verlaufende Lekkagekammern (10) aufweisen und das die Lekkagekammern zur Seite hin lediglich über Kanäle (10a) zugänglich sind, deren Anfangsquerschnitte (10b) dem benachbarten Endlosförderband außerhalb des Förderraums (1) gegenüberliegen und die bezüglich des Endlosförderbandes von Förderraum weggerichtet schräg verlaufen.

2. Abdichtung nach Anspruch 1, dadurch gekennzeichnet, daß die Länge des Dichtspalts (4) ein Mehrfaches der Dicke des benachbarten Endlosförderbandes (2) ausmacht.

3. Abdichtung nach Anspruch 1 oder 2, dadurch gekennzeichnet, daß jede Leckagekammer (10) mehrere nebeneinander liegende Kanäle (10a, 14) aufweist.

4. Abdichtung nach Anspruch 3, dadurch gekennzeichnet, daß die nebeneinander liegenden Kanäle (10a, 14) bezüglich des benachbarten Endlosförderbandes (2) gleichartig ausgerichtet sind.

5. Abdichtung nach einem der Ansprüche 1 bis 4, dadurch gekennzeichnet, daß die Seitenbegrenzungen (3) an ihren den Endlosförderbändern (2) zugewandten Seiten Sperrluft-Leitrippen (12) aufweisen, die schräg zur Bewegungsrichtung des benachbarten Endlosförderbandes (2) ausgerichtet sind.

6. Abdichtung nach einem der Ansprüche 1 bis 5, dadurch gekennzeichnet, daß die Leckagekammern (10) mittels eines Gebläses belüftbar sind.

7. Abdichtung nach einem der Ansprüche 1 bis 6, dadurch gekennzeichnet, daß die Seitenbegrenzungen (3) auf ihrer dem Förderraum (1) zugewandten Innenseite (3a) auswechselbare Verschleißplatten (11) tragen.

8. Abdichtung nach Anspruch 7, dadurch gekennzeichnet, daß die Verschleißplatten (11) die Wandung der Kanäle (10a) mitbilden.

9. Abdichtung nach Anspruch 7, dadurch gekennzeichnet, daß die dem benachbarten Endlosförderband (2) zugewandte Seitenfläche (11a) jeder Verschleißplatte (11) derart geneigt ist, daß der Abstand zwischen ihr und dem Endlosförderband in Richtung auf den nachfolgenden Kanal (10a) abnimmt.

10. Abdichtung nach Anspruch 9, dadurch gekennzeichnet, daß die Verschleißplatten (11) in der Nähe der Endlosförderbänder (2) Verdickungen (11c) aufweisen, deren Bestandteil die Seitenfläche (11a) ist.

11. Abdichtung nach einem der Ansprüche 1 bis 10, dadurch gekennzeichnet, daß die Endlosförderbänder (2) sich im Bereich der Seitenbegrenzungen (3) zusätzlich an Führungsblechen (7) abstützen, die zwischen den in Förderrichtung aufeinanderfolgenden Stützwalzen (5 bzw. 6) angeordnet sind.

12. Abdichtung nach einem der Ansprüche 1 bis 11, dadurch gekennzeichnet, daß die Seitenbegrenzungen (3) im Bereich der Leckagekammern (10) mit einstellbaren Dichtlippen (15) ausgestattet sind, die nachgiebig an dem benachbarten Endlosförderband (2) anliegen.

13. Abdichtung nach einem der Ansprüche 1 bis 12, dadurch gekennzeichnet, daß jede Leckagekammer (10) - in der Draufsicht gesehen - dreieckförmig ausgebildet ist und die dem Förderraum (1) benachbarte Kanalwandung geradlinig in die dem Förderraum benachbarte Kammerwand (10c) übergeht.

## Claims

1. A sealing system on a vertical conveyor for bulk goods with a conveying space which is enclosed in cross-section by two endless conveyor (2) belts retained on supporting rollers (5, 6) and by two lateral boundaries (3), the endless conveyor belts (2) and lateral boundaries (3) being driven in reciprocation transversely of the conveying direction, characterized in that the lateral boundaries (3), which are fixed in relation to the supporting rollers (5, 6) and are separated from the endless conveyor belts (2) by a sealing gap (4), have leakage chambers (10) extending in the direction of their longitudinal extension, and the leakage chambers are accessible in the lateral direction solely via channels (10a) whose initial cross-sections (10b) are disposed opposite the adjoining endless conveyor belts outside the conveying space (1) and which extend in relation to the endless conveyor belt at an inclination away from the conveying space.

2. A sealing system according to claim 1, characterized in that the length of the sealing gap (4) is a multiple of the thickness of the adjoining endless conveyor belt (2).

3. A sealing system according to claims 1 or 2, characterized in that each leakage chamber (10) has a number of channels (10a, 14) disposed one beside the other.

4. A sealing system according to claim 3, characterized in that the channels (10a, 14) disposed one beside the other are identically aligned in relation to the adjoining endless conveyor belt (2).

5. A sealing system according to one of claims 1 to 4, characterized in that the lateral boundaries (3) have on their sides adjacent the endless conveyor belts (2) barrier air deflecting ribs (12) which are aligned at an inclination to the direction of movement of the endless conveyor belt (2).

6. A sealing system according to claims 1 to 5, characterized in that the leakage chambers (10) can be aerated by means of a fan.

7. A sealing system according to one of claims 1 to 6, characterized in that the lateral boundaries (3) bear interchangeable wearing plates (11) on their inner side (3a) adjacent the conveying space (1).

8. A sealing system according to claim 7, characterized in that the wearing plates (11) contribute towards forming the wall of the channels (10a).

9. A sealing system according to claim 7, characterized in that that surface (11a) of each wearing plate (11) which is adjacent the adjoining endless conveyor belt (2) is so inclined that the distance between said surface and the endless conveyor belt decreases in the direction of the following channel (10a).

10. A sealing system according to claim 9, characterized in that adjacent the endless conveyor belts (2) the wearing plates (11) have thickened portions (11c) of which the lateral surface (11a) forms part.

11. A sealing system according to one of claims 1 to 10, characterized in that in the zone of the lateral boundaries (3) the endless conveyor belts (2) additionally bears against guide plates (7) which are disposed between the supporting rollers (5; 6) following one another in the conveying direction.

12. A sealing system according to one of claims 1 to 11, characterized in that in the zone of the leakage chambers (10) the lateral boundaries (3) have adjustable sealing lips (15) which bear resiliently against the adjacent endless conveyor belt (2).

13. A sealing system according to one of claims 1 to 12, characterized in that viewed in plan each leakage chamber (10) is triangular in construction and the channel wall adjacent the conveying space (1) merges rectilinearly into the chamber wall (10c) adjacent the conveying space.

**Revendications**

1. Dispositif d'étanchéité sur un transporteur vertical pour matériau en vrac, comportant un volume de transport, dont la section est entourée par deux bandes transporteuses sans fin (2), maintenues par des rouleaux d'appui (5, 6), et par deux parois latérales de délimitation (3), les bandes transporteuses sans fin (2) et les parois latérales de délimitation (3) étant entraînées de façon à pouvoir se déplacer dans un sens et dans l'autre transversalement par rapport à la direction de transport,
caractérisé en ce que
les parois latérales de délimitation (3), ayant une position fixe par rapport aux rouleaux d'appui (5, 6), et étant séparées des bandes transporteuses sans fin (2) au moyen d'une rainure d'étanchéité (4), présentent des chambres d'évacuation (10) orientés suivant la direction de l'extension longitudinale des parois, et en ce que les chambres d'évacuation communiquent par le côté, purement et simplement par l'intermédiaire de canaux (10a), dont les sections d'entrée (10b) sont placées contre la bande transporteuse sans fin voisine, en dehors du volume de transport (1), et ont une direction oblique par rapport à la bande transporteuse sans fin, en s'éloignant du volume de transport.

2. Dispositif d'étanchéité suivant la revendication 1, caractérisé en ce que la longueur de la rainure d'étanchéité (4) est un multiple de l'épaisseur de la bande transporteuse sans fin (2) voisine.

3. Dispositif d'étanchéité suivant la revendication 1 ou la revendication 2, caractérisé en ce que chaque chambre d'évacuation (10) présente plusieurs canaux (10a, 14) disposés côte à côte.

4. Dispositif d'étanchéité suivant la revendication 3, caractérisé en ce que les canaux (10a, 14) sont dirigés de la même façon par rapport à la bande transporteuse sans fin (2) voisine.

5. Dispositif d'étanchéité suivant l'une quelconque des revendications 1 à 4, caractérisé en ce que les parois latérales de délimitation (3) présentent, sur leur côtés tournés vers les bandes transporteuses sans fin (2), des nervures directrices (12) pour l'air de barrage*, qui sont dirigées obliquement par rapport au sens de déplacement de la bande transporteuse sans fin (2) voisine.

6. Dispositif d'étanchéité suivant l'une quelconque des revendications 1 à 5, caractérisé en ce que les chambres d'évacuation (10) peuvent être ventilées au moyen d'une soufflante.

7. Dispositif d'étanchéité suivant l'une quelconque des revendications 1 à 6, caractérisé en ce que les parois latérales de délimitation (3) portent sur leur face intérieure tournée vers le volume de transport (1) des plaques d'usure (11) remplaçables.

8. Dispositif d'étanchéité suivant la revendication 7, caractérisé en ce que les plaques d'usure (11) forment un ensemble avec les parois des canaux (10a).

9. Dispositif d'étanchéité suivant la revendication 7, caractérisé en ce que les surfaces latérales (11a), tournées vers la bande transporteuse sans fin (2), de chaque plaque d'usure (11) ont une pente telle que la distance entre elles et la bande transporteuse sans fin décroit si on va vers le canal (10a) suivant.

10. Dispositif d'étanchéité suivant la revendication 9, caractérisé en ce que les plaques d'usure (11) présentent, au voisinage des bandes transporteuses sans fin (2), des surépaisseurs (11c) dont la surface latérale (11a) est une partie constitutive.

11. Dispositif d'étanchéité suivant l'une quelconque des revendications 1 à 10, caractérisé en ce que les bandes transporteuses sans fin (2) prennent, de plus, appui, dans la zone des parois latérales de délimitation (3), sur des tôles de guidage (7) qui sont respectivement disposées entre les rouleaux d'appui (5, ou 6) qui se suivent les uns les autres dans la direction de transport.

12. Dispositif d'étanchéité suivant l'une quelconque des revendications 1 à 11, caractérisé en ce que les parois latérales de délimitation (3) sont, dans la zone des chambres d'évacuation (10), réalisées avec des lèvres d'étanchéité (15) réglables, qui procurent un contact souple avec la bande transporteuse sans fin (2) voisine.

13. Dispositif d'étanchéité suivant l'une quelconque des revendications 1 à 12, caractérisé en ce que chaque chambre d'évacuation (10) - en vue de dessus - est réalisée en forme de triangle et que la paroi du canal, voisine du volume de transport (1), prolonge en ligne droite la paroi de chambre (10c), voisine du volume de transport (1).

FIG.1

# FIG. 2

## FIG.3

## FIG.3a

# FIG.4

# FIG.5

# FIG.6

# FIG. 7